# FASCICULE DE BREVET EUROPEEN

(11) **EP 0 572 345 B1**
(45) Date de publication et mention de la délivrance du brevet: **20.11.1996**
(21) Numéro de dépôt: 93490009.3
(22) Date de dépôt: 30.04.1993
(51) Int. Cl.: B60N 2/46

(54) **Accoudoir pour sièges avant de véhicule**
Armlehne für einen Vordersitz eines Fahrzeuges
Armrest for a front seat of a vehicle

(30) Priorité: 25.05.1992 FR 9206656
(43) Date de publication de la demande: 01.12.1993
(73) Titulaire: Vandamme, Georges, F-59700 Marcq-en-Baroeul (Nord) (FR)
(72) Inventeur: Vandamme, Georges, F-59700 Marcq-en-Baroeul (Nord) (FR)
(74) Mandataire: Lepage, Jean-Pierre

(56) Documents cités:
- FR-A- 1 082 209
- FR-A- 2 633 566
- GB-A- 1 037 972
- US-A- 2 043 626
- US-A- 2 563 922

## Description

L'invention est relative à un accoudoir pour sièges avant de véhicule. Elle trouvera notamment son application dans le domaine des accessoires automobiles.

D'une façon générale, l'accoudoir permet d'augmenter le confort d'un siège en offrant une surface d'appui pour le bras de l'utilisateur, qui peut être soit le conducteur, soit le passager avant. Dans de nombreux cas, les sièges en sont équipés, par exemple dans les avions ou dans les voitures de voyageurs de chemin de fer.

S'agissant des véhicules automobiles, de nos jours seuls les véhicules de très haut de gamme sont construits en série avec un accoudoir. Dans de nombreux cas, la portière comporte un accoudoir très souvent moulé mais rien n'est prévu pour le côté central des sièges avant.

Cela est toutefois regrettable car dans de nombreuses situations et par exemple sur les autoroutes, le fait de pouvoir appuyer le bras sur un accoudoir est très reposant. En outre, le fait de prévoir un accoudoir central permet un bon équilibre de la position par rapport à l'accoudoir de la portière.

Le brevet américain US-A-2 563 922 (correspondant au préambule de la revendication indépendante) décrit un accoudoir pour siège avant de véhicule, présentant une armature susceptible d'être posée sur les sièges avant du véhicule. L'accoudoir décrit dans ce brevet présente des moyens de fixation aptes à prendre appui dans la zone de concours du dossier et de l'assise de chaque siège avant. Cette armature n'est donc pas destinée à être utilisable par chaque passager avant. L'armature conçue dans ce brevet américain US-A-2 563 922 n'est pas non plus susceptible de s'adapter en toute circonstance à toutes les configurations de sièges avant et à leur réglage.

Le brevet français FR-A-2 633 566 appartenant à la demanderesse ne permet pas non plus d'obtenir la solution proposée en combinant les deux documents ci-dessus.

L'Homme de métier devrait en effet soit passer l'accoudoir du brevet américain à l'accoudoir du brevet français et donc forcément renoncer à l'appui au niveau de la zone de concours du dossier et l'assise, soit partir de l'accoudoir du brevet français et transférer l'appui de siège du brevet américain sur la structure du brevet français, ce qui résulte d'une analyse a posteriori.

Un des premiers buts de la présente invention est de proposer un accoudoir pour sièges avant de véhicule qui permette de pallier les inconvénients précités et qui puisse respecter les impératifs de construction des automobiles actuelles.

En particulier, les véhicules proposés actuellement sont équipés de sièges avant séparés, présentant une possibilité de déplacement du siège par rapport au plancher pour s'adapter à la morphologie des conducteur et passager. En outre, les sièges sont équipés également de dossiers inclinables et d'assises réglables pour augmenter le confort des utilisateurs.

Par ailleurs, il est traditionnel de disposer entre les sièges avant la commande de frein à main. De plus, la configuration de la carrosserie à ce niveau est très variable selon les constructeurs, selon le type de propulsion et selon la qualité du confort et de l'aménagement des véhicules.

Dans ces conditions, la présente invention propose un accoudoir pour sièges avant de véhicule qui puisse s'adapter en toutes circonstances, c'est-à-dire quelle que soit la configuration des sièges avant et leur réglage, quel que soit leur écartement et quel que soit le type de configuration de la carrosserie.

En outre, un des avantages de la présente invention est de proposer un accoudoir qui soit considéré comme un accessoire automobile et qui s'adapte facilement dans le véhicule sans nécessiter de perçage ou de fixation compliquée à l'intérieur du véhicule.

Un autre but de la présente invention est de proposer un accoudoir pour sièges avant de véhicule qui soit facilement réglable tout en laissant accès à la commande de frein à main et aux dispositifs de verrouillage des ceintures de sécurité.

Un autre but de la présente invention est que l'accoudoir soit conçu pour s'adapter à tous les types de véhicules possibles qui ont des dimensions intérieures, des formes et des tailles de sièges très différentes. Pour cela, sur certaines variantes de l'invention, on pourra prévoir de régler la position de l'accoudoir entre les sièges avant selon trois directions, une première direction dans le sens longitudinal de l'accoudoir, une deuxième direction transversale perpendiculaire aux portes et une troisième direction perpendiculaire au plancher. Ces trois réglages permettront de trouver la position idéale d'un accoudoir donné dans un véhicule.

Un autre but de la présente invention est de situer l'accoudoir dans le véhicule par rapport à un environnement complexe et très hétérogène, constitué notamment par les sièges, le positionnement de la commande du frein à main, les différentes formes de consoles plus ou moins surélevées par rapport aux sièges.

Un autre but de la présente invention est d'adapter l'accoudoir dans une position idéale dans le véhicule en tenant compte d'une première série de réglages liée à la recherche d'un placement idéal pour la béquille d'appui de l'accoudoir.

Un autre but de la présente invention est d'adapter l'accoudoir et son appui sur les sièges en fonction des différentes formes de sièges, de leur écartement selon la conception du véhicule.

Outre ces facultés d'adaptation, l'accoudoir de la présente invention a été étudié pour pouvoir être fabriqué avec un prix de revient avantageux afin de permettre une large diffusion.

D'autres buts et avantages de la présente invention apparaîtront au cours de la description qui va suivre qui n'est cependant donnée qu'à titre indicatif et qui n'a pas pour but de la limiter.

Selon l'invention, l'accoudoir pour sièges avant de véhicule, présentant une armature apte à être interposée entre les sièges avant et amovible, comportant des moyens de fixation aptes à prendre appui au moins au niveau de la zone de concours du dossier et de l'assise de chaque siège avant, est caractérisé par le fait qu'il présente :
- des moyens d'articulation de l'armature par rapport aux moyens de fixation permettant une rotation autour d'un axe vertical pour régler l'axe longitudinal de l'accoudoir,
- les moyens de fixation se présentant sous la forme d'une tige transversale apte à être maintenue dans l'angle de chaque siège et une seconde tige indépendante et réunie à la tige solidaire de l'armature par des moyens élastiques,
pour s'adapter à toutes les configurations de sièges avant et leur réglage.

La présente invention sera mieux comprise à la lecture de la description suivante, accompagnée de dessins en annexe parmi lesquels :
- la figure 1 schématise la présence d'une variante d'un accoudoir selon l'invention, placé entre les sièges avant du véhicule,
- la figure 2 représente schématiquement en vue de dessus deux sièges avant équipés d'un accoudoir selon la présente invention,
- la figure 3 montre une vue schématique de dessus des sièges avant illustrés à la figure 2, et l'on voit particulièrement la faculté d'adaptation lorsque les sièges sont décalés,
- la figure 4 montre une vue de profil des différents organes composant l'accoudoir de la présente invention, selon un premier mode de réalisation,
- la figure 5 montre une vue de gauche de l'accoudoir représenté à la figure 4,
- la figure 6 montre une vue de dessus de l'accoudoir représenté à la figure 4,
- la figure 7 montre une variante de fixation de l'accoudoir représenté à la figure 4,
- la figure 8 montre un deuxième mode d'exécution de l'accoudoir selon la présente invention ; on a volontairement représenté à cette figure une vue par dessous de l'accoudoir en position renversée pour mieux voir les différentes possibilités de réglage,

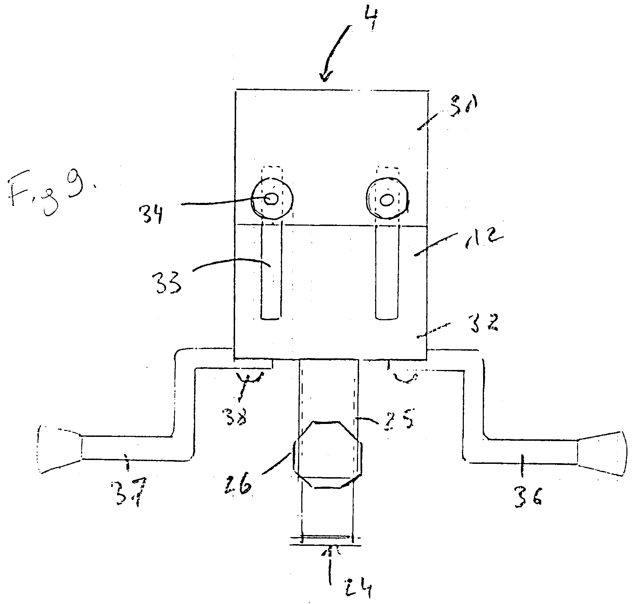

- la figure 9 est une vue arrière de la figure 8.

La présente invention vise un accoudoir pour sièges avant de véhicule et trouvera notamment son application chez les constructeurs d'accessoires automobiles.

Comme rappelé ci-dessus, l'accoudoir a été conçu comme un organe amovible apte à pouvoir s'intégrer dans tous types de véhicules, quelle que soit la hauteur de la surface d'appui à atteindre, quels que soient l'écartement et la configuration entre les sièges avant et également quels que soient le réglage et le positionnement des sièges par les utilisateurs.

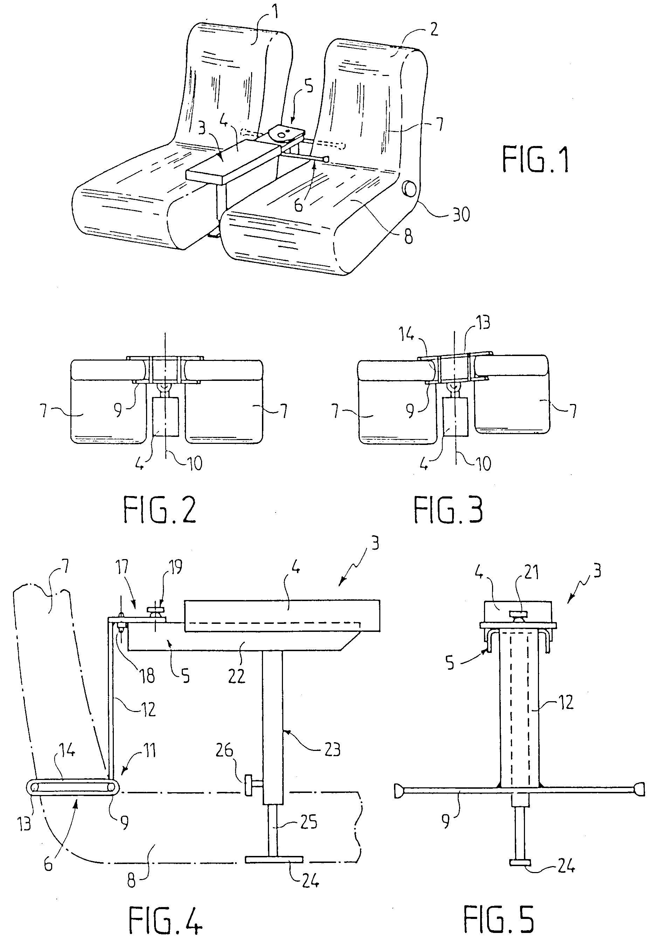

La figure 1 schématise la vue intérieure d'un habitacle de véhicule qui montre deux sièges avant (1 et 2) indépendants entre lesquels l'espace est comblé par la présence de l'accoudoir (3). Cet accoudoir offre une surface supérieure d'appui (4) sur laquelle le conducteur et/ou le passager peuvent reposer un bras. A cet égard, la largeur de la surface d'appui sera adaptée pour que chacun des utilisateurs puisse en bénéficier.

Par ailleurs, l'accoudoir présente une armature, globalement repérée en (5) sur la figure 1, apte à être interposée entre les sièges (1) et (2) et de façon amovible.

C'est sur cette armature (5) que sera fixée la surface d'appui (4) pour le coude. Il est à noter qu'il pourrait être notamment prévu entre l'armature et la surface d'appui un dispositif de réglage de la hauteur de l'accoudoir si cela s'avérait nécessaire.

Par exemple, on pourrait utiliser un système de tringles en X constituant un croisillon articulé et fixé d'une part sur l'armature et d'autre part sur la surface d'appui. Une crémaillère prévue sur l'un des deux éléments permettra par exemple de former des crans et de définir des positions fixes.

Cela étant, l'accoudoir de la présente invention comporte des moyens de fixation globalement repérés par (6) sur les figures, aptes à prendre appui au moins au niveau de la zone de concours du dossier (7) et de l'assise (8) de chaque siège avant.

Dans un mode de réalisation de la présente invention, tel que par exemple illustré aux figures 4 à 6, les moyens de fixation (6) se présentent sous la forme d'une tige (9) solidaire de l'armature (5) et transversale par rapport à l'axe longitudinal du véhicule et de l'accoudoir, axe repéré (10).

La tige (9) peut être constituée par une barre métallique de section circulaire, par exemple rectiligne.

C'est cette tige (9) qui constituera le point d'appui au niveau de la zone de concours du dossier (7) et de l'assise (8) de chaque siège avant. En effet, il est à noter que, quels que soient le véhicule et les possibilités d'adaptation de ses sièges, cette zone, c'est-à-dire l'angle (11) formé par le dossier (7) et l'assise (8), présente une hauteur constante par rapport au plancher du véhicule.

Lorsque l'on déplace le siège en translation, l'angle (11) se déplace parallèlement au plancher. Si l'on incline le dossier vers l'avant ou vers l'arrière, l'arête de cet angle reste également à hauteur constante. Il en est de même lors du relèvement ou de l'abaissement de l'assise (8) qui se fait autour de l'arête de l'angle (11).

Pour disposer la surface d'appui (4) de l'accoudoir à hauteur adaptée, l'armature (5) et la tige (9) seront reliées à l'aide d'un élément vertical (12) tel que par exemple un plat soudé d'une part sur la tige et d'autre part sur l'armature.

Par ailleurs, bien qu'un blocage ou un maintien mécanique de la tige (9) ou du plat (12) puisse être envisagé, les moyens de fixation de la présente invention comportent avantageusement une seconde tige (13) indépendante et réunie à la première tige (9).

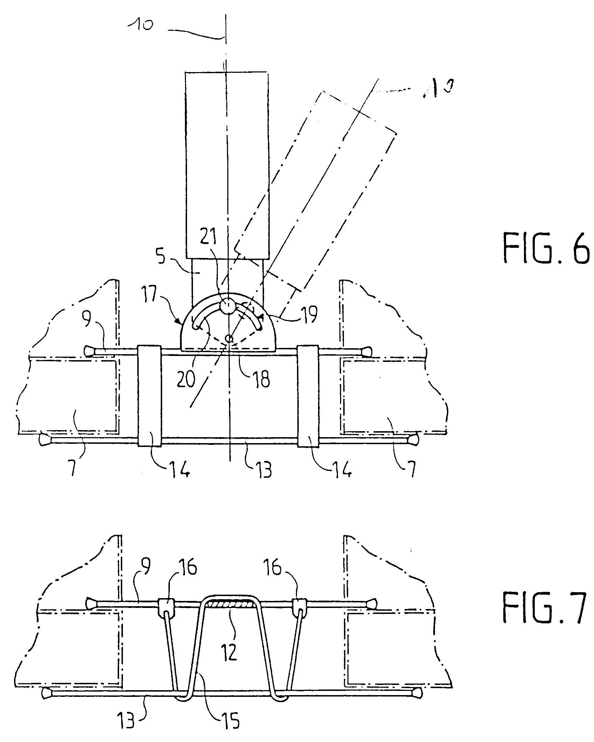

Dans le mode de réalisation illustré aux figures 4 et 6, la première tige (9) et la seconde tige (13) sont réunies par des moyens élastiques (14) afin que chaque dossier (7), au moins partiellement au niveau dudit angle (11), soit pris en sandwich entre les tiges (9 et 13).

Ces moyens élastiques (14) sont constitués par un ou plusieurs liens souples et la figure 6 montre l'utilisation de deux bracelets élastiques.

Dans certains cas, lorsque par exemple la tige (9) sera enfoncée profondément à l'intérieur du siège, il sera quelquefois souhaitable de réaliser la tige (13) d'une façon plus large pour avoir un meilleur contact avec la zone (30) située dans le bas du siège avant. La tige (13) pourra être constituée par deux barres parallèles reliées par des entretoises perpendiculaires.

En revanche, la figure 7 montre l'utilisation d'un lien (15) équipé à ses extrémités de crochets (16). Ces derniers sont par exemple accrochés à la tige (9) puis le lien est enroulé autour de la tige (13) et de l'élément (12) de liaison de la tige (9) et de l'armature (5).

Une telle fixation présente l'avantage de pouvoir s'adapter aux configurations diverses des véhicules et ne nécessite pas de perçage ou autre de la carrosserie.

Il est à noter également que la tige (9), dans le cas de ces moyens élastiques, constitue avantageusement l'axe d'une charnière et il sera possible de placer la surface d'appui (4) verticalement par rotation de l'accoudoir autour de la tige (9).

Cela étant, l'accoudoir (3) de la présente invention présente des moyens d'articulation de l'armature (5) par rapport aux moyens de fixation (6) permettant de régler l'axe longitudinal de l'accoudoir.

En effet, comme le montrent les figures 2 et 3, les sièges avant (1, 2) sont susceptibles d'être réglés indépendamment l'un de l'autre. Dans ces conditions, il est nécessaire de pouvoir placer l'axe longitudinal (10) de l'accoudoir en coïncidence avec celui du véhicule.

La figure 2 montre les deux sièges placés à un même niveau tandis que la figure 3 montre un décalage entre les deux sièges.

Dans ce dernier cas, si la surface d'appui (4) de l'accoudoir restait perpendiculaire à la tige (9), l'accoudoir serait oblique. Les moyens d'articulation de l'armature permettent de replacer l'appui (4) dans une position correcte.

Il est à noter également que dans ce cas, les moyens de fixation (6) ne constituent pas un handicap pour le réglage séparé des sièges car la tige (9), les liens (14) et la seconde tige (13) constituent un quadrilatère déformable en fonction des situations.

Les figures 4 à 6 montrent un mode de réalisation des moyens d'articulation (17). Ils sont constitués par un axe (18) permettant 12 rotation de l'armature (5) par rapport aux moyens de fixation (6, 9, 12 et 13) coopérant avec un dispositif (19) de blocage de ladite armature (5) dans une position choisie.

Ce dispositif de blocage (19) se présente sous la forme d'une lumière (20) circulaire, coaxiale audit axe de rotation (19), traversée d'un organe de serrage (21) apte à lier l'armature (5) et les moyens de fixation (6) et particulièrement le profil en U (22) horizontal constituant la partie de l'armature (5) destinée à supporter la surface d'appui (4).

En ce qui concerne la lumière (20), elle est constituée par exemple dans un plat fixé perpendiculairement à l'élément (12) de liaison de l'armature et de la première tige (9) comme le montrent particulièrement les figures 4 et 6.

Néanmoins, d'autres modes de réalisation et de moyens d'articulation (17) peuvent être envisagés, tels que par exemple des disques à crans pressés l'un contre l'autre par des moyens élastiques et d'une façon générale, tout dispositif constituant des moyens équivalents, permettant la rotation d'un élément par rapport à un autre avec une possibilité de blocage axial.

Par ailleurs, l'accoudoir présente des moyens de stabilisation (23) de l'armature (5) aptes à constituer un point d'appui (24) complémentaire par rapport au véhicule. Ces moyens (23) permettront de stabiliser horizontalement la surface d'appui (4) et d'adapter la hauteur entre celle-ci et la surface d'appui.

A cet égard, ces moyens de stabilisation (23) seront par exemple constitués par au moins un pied télescopique (25), solidaire de l'armature (5) et dont l'extrémité permettra de prendre ledit appui (24) dans l'espace séparant les deux sièges avant.

Dans le cas représenté sur les figures, le pied télescopique est constitué par deux tubes concentriques et emboîtables, immobilisés par exemple par un bouton de blocage à vis (26).

Par ailleurs, comme il est évoqué précédemment, l'accoudoir tel qu'illustré aux figures 4 à 6 peut être relevé verticalement entre les sièges avant grâce à la rotation de tout l'ensemble par rapport à la tige (9).

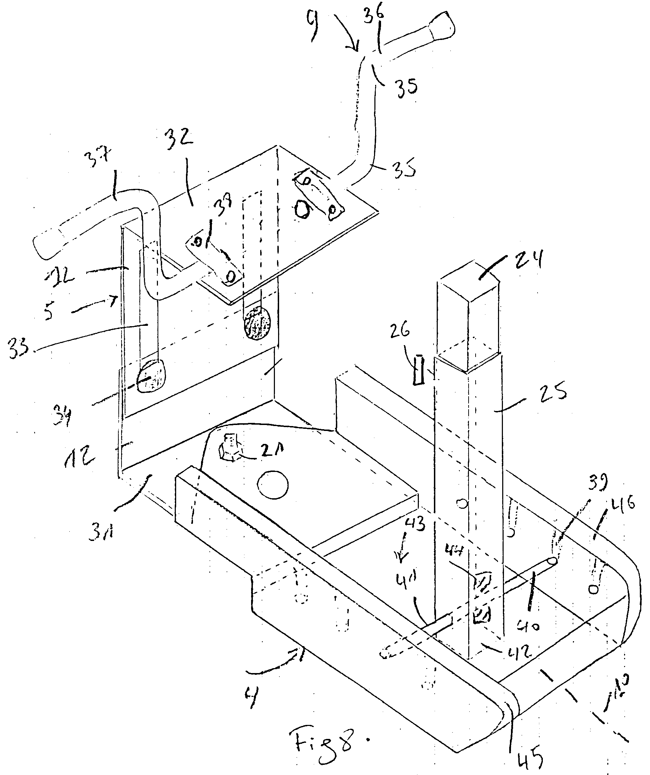

On a représenté à la figure 8 une deuxième variante d'un accoudoir selon l'invention, qui constitue un autre mode d'exécution et dont les mérites sont tout aussi intéressants et importants que le premier.

L'armature (5) est réalisée en deux parties, une partie supérieure (31) et une partie inférieure (32). La pièce de liaison (12) est donc réalisée en deux parties qui présente des lumières longitudinales (33). Les deux parties (12) sont immobilisées les unes par rapport aux autres au moyen d'un écrou et d'une vis (34) assurant un réglage et un serrage. On peut aussi à volonté rapprocher ou éloigner les parties (31 et 32) pour faire varier la distance de la surface d'appui (4) par rapport au point d'appui (24) du pied télescopique (25).

Les lumières longitudinales (33) présentent encore l'avantage de pouvoir adapter l'accoudoir à la morphologie du conducteur et l'on pourra régler plus ou moins la hauteur de l'élément vertical (12) selon que le conducteur aura un bras plus ou moins long.

Dans ce mode d'exécution, la tige (9) n'est plus rectiligne mais elle a été au contraire réalisée avec des courbes (35). Cette configuration permet de s'adapter quelquefois à des consoles de frein à main plus hautes. Il est à noter également que dans certains cas, la réalisation d'une tige (9) en deux parties (36 et 37) peut avoir un avantage lorsque, pour s'adapter à différentes formes de sièges, on cherchera à rapprocher ou à écarter les deux pièces (36, 37) les unes par rapport aux autres. Cela se produira aussi lorsque, suivant les types de véhicules, l'écartement central entre les deux sièges est variable.

On dispose pour cela de colliers (38) qui assurent le serrage des tiges (36 et 37) sur la partie inférieure (32) de l'armature. On procédera à ce réglage pour obtenir un bon positionnement de la tige (9) dans l'angle (11) comme cela est représenté à la figure 4.

Le positionnement de la tige (9) coudée s'effectue de la même façon que la première variante en ce qui concerne tout au moins le contact au niveau du siège et l'appui dans la zone (11) de concours du dossier (7) et l'assise (8). La position de l'accoudoir et son maintien n'ont pas changé à ce sujet et la tige (9) coudée est réalisée en deux parties, ce qui permet d'échapper à certains obstacles et de procéder à des réglages complémentaires pour encore mieux s'adapter aux véhicules.

Naturellement la deuxième variante d'exécution représentée à la figure 8 comprend également des moyens d'articulation constitués par un axe de rotation de l'armature (5) par rapport aux moyens de fixation (9, 36, 37) coopérant avec un dispositif de blocage de cette armature dans une position choisie.

Ce dispositif, qui se présente sous la forme d'une lumière circulaire coaxiale à l'axe de rotation (18) est traversé par un organe de serrage (21). Ces éléments ne sont pas visibles sur la figure 8.

En-dessous de la surface d'appui (4) de l'accoudoir, on peut voir à la figure 8 les différentes possibilités pour procéder aux réglages du point d'appui (24) du pied télescopique (25).

On sait en effet que ce réglage est important puisque c'est lui qui doit permettre de trouver la position idéale de l'accoudoir dans un véhicule déterminé.
on pourra encore, en fonction de l'environnement, c'est-à-dire la forme des sièges, la position de la commande du frein à main ainsi que les différentes formes de console, souhaiter modifier ce point d'appui et l'adapter aux véhicules.

Pour cela, on disposera d'un premier réglage constitué par des gorges (39) par exemple au nombre de quatre dans lesquelles pourront venir se clipser les extrémités (40) d'un axe (41). Le pied télescopique (25) est traversé de part en part par cet axe et la base du pied (42) est dimensionnée pour venir en appui sur le fond (43) de l'accoudoir.

On notera que les gorges (39) sont réalisées à l'intérieur des deux faces (45 et 46) et qu'elles sont de ce fait ni visibles ni accessibles.

Sur l'axe (41), on a également engagé un frein en caoutchouc (44) permettant d'obtenir un réglage supplémentaire pour la situation de la surface du point d'appui (24) dans l'espace et donc pour la recherche de la meilleure position possible selon le véhicule. Ce frein caoutchouc permet en effet de faire coulisser d'une façon très fine et sensible la base (42) du pied (25) dans l'axe (41). On voit ainsi que, pour une position déterminée de l'axe (41) dans une gorge (39), on pourra faire prendre au pied (25) à l'aide du frein (44) de nombreuses positions dans lesquelles ce pied sera soit rapproché de la paroi (45) soit rapproché de la paroi (46).

Dans le mode d'exécution représenté à la figure 8, on a également prévu de régler l'élément télescopique du pied par le bouton de serrage (26) qui permet d'obtenir le troisième réglage vertical du point d'appui (24) dans le sens de la hauteur perpendiculaire au plancher du véhicule.

En ce qui concerne le montage de l'accoudoir dans le véhicule, on procédera de préférence à ce montage avec les sièges dans le même alignement. On placera la tige (9) dans la zone d'appui des sièges et on procédera donc ensuite à un réglage des lumières longitudinales (33) qui doivent s'adapter au bras du conducteur pour avoir une surface d'appui (4) plus ou moins élevée.

On recherchera ensuite la position idéale du point d'appui (24) en trouvant tout d'abord la gorge (39)

On recherchera ensuite la position idéale du point d'appui (24) en trouvant tout d'abord la gorge (39) adéquate par rapport à l'environnement du véhicule, frein à main, console de frein à main ou ceintures de sécurité.

L'accoudoir est placé derrière le frein à main et il ne gêne donc pas la commande de celui-ci. De même, les ceintures de sécurité restent très accessibles.

Lorsque l'on aura choisi une gorge (39), on pourra alors déplacer le pied (25) le long de l'axe (41) en laissant un accès facile en ce qui concerne les ceintures de sécurité.

En ce qui concerne le maintien ou le blocage de la tige (9) pour cette deuxième variante, on se référera aux solutions qui ont été proposées pour la première variante vis-à-vis notamment des moyens élastiques et de l'utilisation d'une deuxième tige (13).

## Revendications

1. Accoudoir (3) pour sièges avant de véhicule, présentant une armature (5) apte à être interposée entre les sièges avant (1 et 2) et amovible, comportant des moyens de fixation (6) aptes à prendre appui au moins au niveau de la zone (11) de concours du dossier (7) et de l'assise (8) de chaque siège avant, caractérisé par le fait qu'il présente :
- des moyens (17) d'articulation de l'armature (5) par rapport aux moyens de fixation (6) permettant une rotation autour d'un axe (18) vertical pour régler l'axe longitudinal (10) de l'accoudoir,
- les moyens de fixation (6) se présentant sous la forme d'une tige transversale (9) apte à être maintenue dans l'angle (11) de chaque siège et une seconde tige (13) indépendante et réunie à la tige (9) solidaire de l'armature par des moyens (14, 15, 16) élastiques,
pour s'adapter à toutes les configurations de sièges avant et leur réglage.

2. Accoudoir, selon la revendication 1, caractérisé par le fait qu'il présente des moyens de stabilisation (23) de l'armature (5) aptes à constituer un point d'appui (24) complémentaire par rapport au véhicule.

3. Accoudoir, selon la revendication 1, caractérisé par le fait que les moyens d'articulation (17) de ladite armature sont constitués par un axe (18) permettant de régler l'axe longitudinal (10) coopérant avec un dispositif (19) de blocage de ladite armature (5) dans la position choisie.

4. Accoudoir, selon la revendication 1, caractérisé par le fait que le dispositif de blocage se présente sous la forme d'une lumière (20) circulaire coaxiale audit axe de rotation (18), traversée par un organe de serrage (21) apte à lier l'armature (5) et les moyens de fixation (6).

5. Accoudoir, selon la revendication 1, caractérisé par le fait que les moyens (23) de stabilisation sont constitués par au moins un pied télescopique (25) solidaire de l'armature (5) et apte à prendre appui dans l'espace séparant les deux sièges avant.

6. Accoudoir, selon la revendication 1, caractérisé par le fait que la tige (9) est réalisée en deux parties (36, 37), chaque partie étant coudée et susceptible d'être écartée l'une par rapport à l'autre.

7. Accoudoir, selon la revendication 1, caractérisé par le fait que l'élément vertical (12) est réalisé en deux pièces présentant des lumières longitudinales (33) permettant de régler la hauteur de cet élément.

8. Accoudoir, selon la revendication 1, caractérisé par le fait que le pied télescopique (25) est susceptible d'occuper plusieurs positions (39) selon des axes parallèles.

9. Accoudoir, selon la revendication 1, caractérisé par le fait que le pied télescopique (25) est susceptible de se déplacer latéralement sous l'accoudoir selon plusieurs positions avec un frein caoutchouc (44).

## Claims

1. Armrest (3) for a front seat of a vehicle, having a brace (5) capable of being interposed between the front seats (1 and 2) and removable, including fixing means (6) capable of resting at least at the level of the area of concurrence (11) of the back (7) and the seating (8) of each front seat, characterized in that it has:
- means (17) for hinging the brace (5) with respect to the fixing means (6), which allow a rotation about a vertical axis (18) in order to adjust the longitudinal axis (10) of the armrest,
- the fixing means (6) being in the shape of a cross rod (9) capable of being maintained in the corner (11) of each seat and a second independent rod (13) connected to the rod (9) integral with the brace through elastical means (14, 15, 16),
in order to be adapted to all the configurations of the front seats and their adjustment.

2. Armrest according to claim 1, characterized in that it has means (23) for stabilizing the brace (5) capable of forming a complementary resting point (24) with respect to the vehicle.

3. Armrest according to claim 1, characterized in that the hinging means (17) for said brace are formed by an axis (18) allowing to adjust the longitudinal axis (10) co-operating with a device (19) for locking said brace (5) in the selected position.

4. Armrest according to claim 1, characterized in that the locking device is in the shape of a circular hole (20) coaxial to said rotation axis (18), through which passes a tightening organ (21) capable of connecting the brace (5) and the fixing means (6).

5. Armrest according to claim 1, characterized in that the stabilizing means (23) are formed by at least a telescopic stand (25) integral with the brace (5) and capable of resting in the space separating both front seats.

6. Armrest according to claim 1, characterized in that the rod (9) is made of two parts (36, 37), each part being bent and capable of being separated from each other.

7. Armrest according to claim 1, characterized in that the vertical member (12) is made of two parts having longitudinal holes (33) allowing to adjust the height of this member.

8. Armrest according to claim 1, characterized in that the telescopic stand (25) is capable of taking various positions (39) according to parallel axes.

9. Armrest according to claim 1, characterized in that the telescopic stand (25) is capable of sidely moving under the armrest according to various positions, with a rubber brake (44).

## Patentansprüche

1. Armlehne (3) für einen Vordersitz eines Fahrzeuges, die ein Gestell (5) aufweist, das geeignet ist, zwischen die Vordersitzen (1 und 2) eingefügt zu werden und ausnehmbar zu sein und Befestigungsmittel (6) umfaßt, die geeignet sind, sich wenigstens im Bereich des Zusammenlaufbereichs (11) der Rückenlehne (7) und der Sitzfläche (8) jedes Vordersitzes zu stützen, dadurch gekennzeichnet, daß sie:
- Mittel (17) zum Bewegen des Gestells (5) bezüglich der Befestigungsmittel (6) aufweist, die eine Drehung um eine senkrechte Achse (18) erlaubt, um die Längsachse (10) der Armlehne einzustellen,
- wobei die Befestigungsmittel (6) als eine Querstange (9), die geeignet ist, in der Ecke (11) jedes Sitzes gehalten zu werden, und eine zweite, unabhängige, über elastische Mittel (14, 15, 16) mit der fest mit dem Gestell verbundenen Stange (9) verbunde Stange (13) ausgestaltet sind,
um allen Konfigurationen der Vordersitze und deren Einstellung angepaßt zu sein.

2. Armlehne nach Anspruch 1, dadurch gekennzeichnet, daß sie Mittel (23) zum Stabilisieren des Gestells (5) aufweist, die geeignet sind, einen ergänzenden Stützpunkt (24) bezüglich des Fahrzeuges zu bilden.

3. Armlehne nach Anspruch 1, dadurch gekennzeichnet, daß die Mittel (17) zum Bewegen des genannten Gestells aus einer Achse (18) bestehen, die die Einstellung der Längsachse (10) erlaubt, die mit einer Vorrichtung (19) zum Feststellen des genannten Gestells (5) in der gewählten Stellung zusammenwirkt.

4. Armlehne nach Anspruch 1, dadurch gekennzeichnet, daß die Feststellvorrichtung als ein zur genannten Drehachse (18) koaxiales, kreisförmiges Loch (20) ausgestaltet ist, das von einem Feststellorgan (21) durchsetzt ist, das geeignet ist, das Gestell (5) und die Befestigungsmittel (6) zu verbinden.

5. Armlehne nach Anspruch 1, dadurch gekennzeichnet, daß die Stabilisierungsmittel (23) aus mindestens einem fest mit dem Gestell (5) verbundenen, teleskopischen Ständer (25) bestehen, der geeignet ist, sich in dem die beiden Vordersitze trennenden Raum zu stützen.

6. Armlehne nach Anspruch 1, dadurch gekennzeichnet, daß die Stange (9) aus zwei Teilen (36, 37) ist, wobei jeder Teil gebogen und geeignet ist, voneinander entfernt zu werden.

7. Armlehne nach Anspruch 1, dadurch gekennzeichnet, daß der senkrechte Teil (12) aus zwei Teilen ist, die Längslöcher (33) aufweisen, die es erlauben, die Höhe dieses Teils einzustellen.

8. Armlehne nach Anspruch 1, dadurch gekennzeichnet, daß der teleskopische Ständer (25) in der Lage ist, mehrere Positionen (39) gemäß gleichlaufenden Achsen einzunehmen.

9. Armlehne nach Anspruch 1, dadurch gekennzeichnet, daß der teleskopische Ständer (25) in der Lage ist, sich mit einer Gummibremse (44) seitlich unterhalb der Armlehne in verschiedene Stellungen zu verschieben.
